(19) Europäisches Patentamt / European Patent Office / Office européen des brevets

(11) **EP 2 327 309 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.11.2020 Patentblatt 2020/45**

(45) Hinweis auf die Patenterteilung:
**09.01.2013 Patentblatt 2013/02**

(21) Anmeldenummer: **09175720.3**

(22) Anmeldetag: **11.11.2009**

(51) Int Cl.:
*A21D 2/02* (2006.01)    *A21D 10/00* (2006.01)
*A23L 1/304* (2006.01)   *C01B 25/34* (2006.01)

(54) **Magnesiumpyrophosphat enthaltendes Produkt und dessen Verwendung als Triebsäure für die Herstellung von Backwaren**

Product containing magnesium pyrophosphate and its use as a leavening agent for producing baked products

Produit comprenant du pyrophosphate de magnésium et son utilisation comme acide mouvant pour la fabrication de produits boulangers

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**01.06.2011 Patentblatt 2011/22**

(73) Patentinhaber: **Chemische Fabrik Budenheim KG 55257 Budenheim (DE)**

(72) Erfinder:
- **Bouchain, Wolfgang**
  **65207 Wiesbaden (DE)**
- **Markmann, Joachim**
  **55452 Dorsheim (DE)**
- **Schnee, Rainer**
  **55130 Mainz (DE)**
- **Wissemborski, Rüdiger**
  **55435 Gau-Algesheim (DE)**

(74) Vertreter: **WSL Patentanwälte Partnerschaft mbB Kaiser-Friedrich-Ring 98 65185 Wiesbaden (DE)**

(56) Entgegenhaltungen:
**US-A- 3 852 497    US-A- 5 405 636
US-A- 5 409 724**

- **"Magnesium phosphate" In: George A. Burdock: "Food and Color Additives" 1. Januar 1996 (1996-01-01), CRC Press , Boca Raton , XP002568647 Bd. 2, , Seiten 1629-1630 * Seite 1630 ***
- **M.Rao: "Monomagnesium phosphate, trisodium diphosphate" 1. Januar 2004 (2004-01-01), Seiten 1-5, XP002568648 Gefunden im Internet: URL:ftp://ftp.fao.org/es/esn/jecfa/cta _61_Phosphates.pdf> [gefunden am 2010-02-15]**
- **K.Gallenberger: "Klappbares Periodensystem der Elemente" 1. Januar 1996 (1996-01-01), Bayerischer Schulbuch -Verlag , München , XP002568649 , Seiten 1-1 * das ganze Dokument ***
- **G.Jander, E.Blasius: "Lehrbuch der analytischen und präparativen anorganischen Chemie" 1. Januar 1973 (1973-01-01), S.Hirzel Verlag , Leipzig , XP002568650 , Seiten 205-206 * das ganze Dokument ***

EP 2 327 309 B2

## Beschreibung

### Gegenstand der Erfindung

Die Erfindung betrifft ein Triebsystem für die Herstellung von Backwaren mit einem Kohlendioxidträger und einem Triebsäuresystem. Das Triebsäuresystem enthält ein Produkt, welches saures Magnesiumpyrophosphat (Magnesiumdihydrogendiphosphat) und wenigstens Magnesiumorthophosphat. Die Erfindung betrifft weiterhin die Verwendung des Produkts als Triebsäuresystem bei der Herstellung von Backwaren.

### Hintergrund der Erfindung

Bei der Herstellung von Backwaren werden der Masse bzw. dem Teig Triebmittel zugesetzt, die während der Herstellung der Backwaren Gas freisetzen, in der Regel Kohlendioxidgas, das die Masse bzw. den Teig aufgehen lässt und damit lockert. Hierfür können thermisch induzierte Gasträger oder chemische Triebsysteme eingesetzt werden. Bei den chemischen Backtriebsystemen reagiert ein Kohlendioxidträger mit einem Säureträger (Triebsäure) unter Freisetzung von Kohlendioxid ($CO_2$).

Als Kohlendioxidträger wird sehr häufig Natriumhydrogencarbonat ($NaHCO_3$; Natriumbicarbonat) eingesetzt, aber auch andere Kohlendioxidträger, wie Kaliumhydrogencarbonat, Kaliumcarbonat (Pottasche), Ammoniumhydrogencarbonat (ABC-Trieb) und Hirschhornsalz, ein Gemisch aus Ammoniumverbindungen der Kohlen- und Carbaminsäure, Natriumcarbonat, Magnesiumcarbonat, Magnesiumhydrogencarbonat, Calciumcarbonat, Calciumhydrogencarbonat, Aluminiumcarbonat, Aluminiumhydrogencarbonat, Eisencarbonat, Eisenhydrogencarbonat, Ammoniumcarbonat oder Ammoniumcarbamat.

Als Säureträger (Triebsäuren) sind verschiedene Säuren und saure Salze bekannt. Eine Aufstellung der wichtigsten Triebsäuren findet man beispielsweise in der Richtlinie für Backtriebmittel, Backpulver, Hirschhornsalz und Pottasche (BLL 1962) sowie in der Literatur bei Brose et al. "Chemische Backtriebmittel"; 2. Auflage, 2007.

Einige Triebsäuren haben den Nachteil, dass sie unter Zugabe von Wasser bereits bei der Massen- bzw. Teigbereitung sehr rasch mit dem Kohlendioxidträger reagieren und dann für den Trieb während der Standzeit oder während des Backens kein Kohlendioxid mehr zur Verfügung steht. Dies ist insbesondere ein Problem für Backerzeugnisse mit einer längeren Backzeit. Aus diesem Grund wird häufig saures Natriumpyrophosphat (SAPP) als Triebsäure in Backtriebsystemen eingesetzt, da es verzögert reagiert. Dieses kann jedoch das Backergebnis aufgrund eines typischen, häufig unerwünschten und insbesondere bei hoher Dosierung auftretenden Eigengeschmacks (Pyrophosphatgeschmack) beeinträchtigen.

Weitere Beispiele für phosphathaltige und phosphatfreie Triebsäuren sind Monocalciumphosphat-Monohydrat (MCPM), Monocalciumphosphat wasserfrei (AMCP), Dicalciumphosphat-Dihydrat (DCPD), saures Calciumpyrophosphat (CAPP), saures Natriumaluminiumphosphat (SALP), Natriumaluminiumsulfat (SAS), Weinstein (saures Kaliumtartrat), Gluconsäure-delta-Lacton (GDL), Zitronensäure, Weinsäure und Fumarsäure.

Die EP-A-0 648 421 beschreibt ein Backtriebsystem, welches als Triebsäure Dimagnesiumphosphate, nämlich ein Gemisch aus Dimagnesiumphosphat-Trihydrat, amorphem Dimagnesiumphosphat und gegebenenfalls einer geringen Menge an Dimagnesiumpyrophosphat enthält. Im Backversuch zeigte das Gemisch aus Dimagnesiumphosphat-Trihydrat und amorphem Dimagnesiumphosphat keine ausreichend guten Backeigenschaften. Das erhaltene Gebäck war kaum gelockert, hatte ein zu dichtes Porenbild, klebrige Kaueigenschaften und einen unangenehmen Fremdgeschmack. Der Fremdgeschmack wurde durch eine zu geringe Neutralisationsreaktion mit dem Kohlendioxidträger verursacht, was eine Messung des pH-Wertes des Gebäcks bestätigte, der mit einem Wert von 8,4 zu alkalisch war.

Zwei besonders wichtige Kennzahlen zur Charakterisierung von Triebsäuren sind der Neutralisationswert (NW) und die Reaktionsgeschwindigkeit (rate of reaction, ROR).

Der Neutralisationswert (NW) gibt an, wieviel Säureträger man zur Neutralisation eines bestimmten Kohlendioxidträgers benötigt. Man erhält ihn, indem man die Menge an Kohlendioxidträger durch die Menge an Säureträger teilt, den man für die Neutralisation des Kohlendioxidträgers braucht, und den erhaltenen Quotienten mit 100 multipliziert. Wenn in dieser Patentanmeldung Neutralisationswerte angegeben sind, so beziehen sich diese immer auf Natriumhydrogencarbonat als Kohlendioxidträger, sofern nicht ausdrücklich etwas anderes genannt ist.

Die Reaktionsgeschwindigkeit (ROR) ist der Prozentsatz an tatsächlich entstehender Kohlendioxidgasmenge gegenüber der bei vollständiger Umsetzung theoretisch erhältlichen Kohlendioxidgasmenge bei der Umsetzung von Kohlendioxidträger und Säureträger bei einer Temperatur von 27°C für einen Zeitraum von 8 min. Wenn In dieser Patentanmeldung Werte der Reaktionsgeschwindigkeit (ROR) angegeben sind, so beziehen sich diese immer auf Natriumhydrogencarbonat als Kohlendioxidträger, sofern nicht ausdrücklich etwas anderes genannt ist.

Triebsysteme für die Herstellung von Backwaren werden häufig so zusammengesetzt, dass sie bei der Lagerung vor der Benutzung bei Raumtemperatur möglichst noch nicht unter Bildung von Kohlendioxidgas abreagieren. Die Freisetzung von Kohlendioxidgas soll vorzugsweise erst bei erhöhter Temperatur, in der Regel bei der Backtemperatur erfolgen. Neben der Auswahl von Kohlendioxidträger(n) und Säureträger(n) lassen sich die Eigenschaften und die Reaktivität des Triebsystems auch durch Zusätze beeinflussen, wie beispielsweise Trennmittel zur Verhinderung oder Verzögerung der vorzeitigen Reaktion zwischen Kohlendioxidträger und Säureträger. Hierfür eignen sich beispielsweise Getreidestärke, wie Maisstärke, Reisstärke oder Weizenstärke, modifizierte Mehle, Siliziumdioxid, Tricalciumphosphate, Calciumcarbonat, Calciumsulfat, Fette und Gemische der vorgenannten.

In den Triebsystemen werden die Triebsäuren häufig einzeln eingesetzt. Sie können aber auch als Mischungen eingesetzt werden, sog. "double acting baking powder", wobei man durch Auswahl von Triebsäuren mit unterschiedlichen Reaktionsgeschwindigkeiten (ROR) die Schäumungseigenschaften beeinflussen kann, um beispielsweise eine besonders homogene Porenbildung zu erhalten. Man nimmt an, dass durch die Kombination eines langsam reagierenden und eines schnell reagierenden Säureträgers zunächst durch den schneller reagierenden Säureträger mit relativ hoher Geschwindigkeit eine Vielzahl kleiner Schaumbläschen gebildet werden, die anschließend bei der Reaktion mit dem langsamer reagierenden Säureträger mit relativ niedriger Geschwindigkeit aufgefüllt werden. Hierbei wird eine sehr gleichmäßige Schäumung und Porenbildung beobachtet.

Die US-A-5 405 636 beschreibt ein Backtriebmittel, welches ein Gemisch aus Dimagnesiumphosphaten, Magnesiumpyrophosphat mit < 5 Gew.-% Pyrophosphat-$P_1O_5$ und einem Carbonatfaktor enthält.

Die US-A-3 852 497 beschreibt ein Magnesium enthaltendes Nahrungszusatzmittel, das In einer bevorzugten Ausführungsform Magnesiumphosphat-Tetrahydrat, Magnesiumhydrogenphosphat-Trihydrat und wasserfreies Magnesiumpyrophosphat enthält.

Die US-A-5 409 724 beschreibt ein Backtriebmittel mit einem Carbonatfaktor und saurem Calciumpyrophosphat. Das saure Calciumpyrophosphat erhält man durch Zugabe von Monocalciumorthophosphat zu einem molaren Überschuss erhitzter Phosphorsäure, Kristallisation des entstehenden Calciumpyrophosphats und anschließende Filtration der Kristalle. Die Kristalle werden dann in einem organischen Lösungsmittel, vorzugsweise Aceton, gewaschen und anschließend getrocknet.

## Aufgabe der Erfindung

Die Aufgabe der vorliegenden Erfindung bestand darin, ein auch als Triebsäure für die Herstellung von Backwaren geeignetes Produkt bereitzustellen, mit dem Nachteile der bekannten Triebsäuren überwunden werden und das eine gute Lockerung und Porenbildung des Gebäcks bei vorteilhaften Reaktionsgeschwindigkeiten erzielt.

## Beschreibung der Erfindung

Gelöst wird diese Aufgabe durch ein Triebsystem für die Herstellung von Backwaren mit einem Kohlendioxidträger und einem Triebsäuresystem, wobei das Triebsäuresystem ein Produkt enthält, welches saures Magnesiumpyrophosphat (Magnesiumdihydrogendiphosphat) und wenigstens Magnesiumorthophosphat enthält, herstellbar durch Entwässern einer wässrigen Lösung oder Suspension einer Magnesiumphosphatverbindung, die ein Molverhältnis von Mg:P von 0,4 - 0,6 : 1 aufweist, wobei das Produkt einen Glühverlust von 7,5 bis 13,5 % aufweist, der bestimmt wird, indem man 2 g Probe bei 800°C für 30 min glüht und den Massenverlust beim Glühen bestimmt, und wobei das Produkt 30 bis 99 Gew.-% Pyrophosphat-$P_2O_5$ und 1 bis 70 Gew.-% Orthophosphat-$P_2O_5$ enthält, wobei sich die Gewichtsprozentangaben auf den Gesamt-$P_2O_5$-Gehalt im Produkt beziehen. Vorzugsweise erfolgt das Entwässern thermisch durch Erhitzen auf erhöhte Temperatur.

Das erfindungsgemäße Produkt eignet sich als Triebsäure in einem Triebsystem zur Herstellung von Backwaren. Es hat den Vorteil, dass es gegenüber vielen anderen Triebsäuren arm an Natrium- und Aluminiumionen ist, deren Mengen in Nahrungsmitteln man aufgrund von gesundheitlichen Bedenken immer stärker zu reduzieren versucht. Gegenüber bekannten Calciumpyrophosphat enthaltenden Triebsäuren werden mit dem erfindungsgemäßen Produkt als Triebsäure überraschenderweise bessere Backergebnisse erzielt.

Magnesium gehört zu den essentiellen Stoffen und muss daher dem Körper täglich In ausreichender Menge zugeführt werden. Die täglich empfohlene Menge (RDA) an Magnesium beträgt bei einem Erwachsenen 375 mg, sie kann aber beispielsweise bei Sportlern, bei Erkrankungen oder bei der Einnahme bestimmter Medikamente höher liegen (Quelle: Richtlinie des Rates über die Nährwertkennzeichnung von Lebensmitten; 90/496/EWG, 21.11.2008). Ein weiterer Vorteil des erfindungsgemäßen Produkts besteht darin, dass es bei der Herstellung von Backwaren Magnesium in die Backwaren einbringt und dem Körper somit beim Verzehr der Backwaren zuführt. Die mit dem erfindungsgemäßen Produkt hergestellten Backwaren können daher auch eine bezüglich des Magnesiumbedarfs vorteilhafte Nahrungsergänzung darstellen.

Das erfindungsgemäße Produkt ist keine Reinsubstanz, sondern ein Stoffgemisch, das herstellungsbedingt wenigstens saures Magnesiumpyrophosphat und Magnesiumorthophosphat enthält. Wenn hierin von Anteilen oder Gewichtsprozent (Gew.-%) Pyrophosphat-$P_2O_5$ oder Orthophosphat-$P_2O_5$ die Rede ist, dann bezieht sich dies jeweils auf den als Pyrophosphat bzw. Orthophosphat vorliegenden $P_2O_5$-Anteil relativ zum Gesamt-$P_2O_5$-Gehalt in dem Pro-

dukt, wobei dem Fachmann klar ist, dass die Angabe "$P_2O_5$" hier als die auf dem Gebiet übliche rechnerische Bezugsgröße zur Angabe des Phosphatgehaltes ist

Das erfindungsgemäße Produkt enthält 30 bis 99 Gew.-% Pyrophosphat-$P_2O_5$ und 1 bis 70 Gew.-% Orthophosphat-$P_2O_5$, besonders geeignet sind 90 bis 99 Gew.-% Pyrophosphat-$P_2O_5$ und 1 bis 10 Gew.-% Orthophosphat-$P_2O_5$.

Ein zu niedriger Anteil an Pyrophosphat hat den Nachteil, einer zu schnellen Reaktion mit dem Kohlendioxidträger während der Anwendung als Triebsäure.

In einer weiteren Ausführungsform der Erfindung ist die Magnesiumphosphatverbindung, aus deren wässriger Lösung oder Suspension das erfindungsgemäße Produkt durch thermisches Entwässern erhältlich ist, eine Orthophosphatverbindung, bevorzugt Monomagnesiumorthophosphat. Dieses besitzt ein theoretisches Molverhältnis von Mg:P von 0.5 : 1,0.

Die wässrige Lösung oder Suspension der Magnesiumphosphatverbindung, aus der das erfindungsgemäße Produkt durch Entwässern erhältlich ist, muss jedoch nicht durch Lösen oder Suspendieren eines Magnesiumorthophosphates hergestellt sein. Sie kann auch durch das Einrühren einer Magnesiumverbindung in Phosphorsäure hergestellt werden. Beispiele hierfür finden sich hierin in den nachstehenden Beispielen.

Der Glühverlust des erfindungsgemäßen Produkts liegt im Bereich von 7,5 bis 13,5 %. In einer weiteren Ausführungsform der Erfindung weist das erfindungsgemäße Produkt einen Glühverlust von 9 bis 11,5 % auf. Ein zu niedriger Glühverlust hat den Nachteil, dass ein Anteil an langkettigen Magnesiumphosphaten entsteht, die den Neutralisationswert senken. Ein zu hoher Glühverlust hat den Nachteil, dass das Produkt bei der Lagerung zur Verklumpung neigt.

Die Bestimmung des Glühverlustes erfolgt, indem man circa 2 g Probe bei 800°C für 30 min glüht und den Massenverlust beim Glühen bestimmt

In einer weiteren Ausführungsform der Erfindung ist das erfindungsgemäße Produkt durch Entwässern bei 140 bis 300°C, vorzugsweise 180 bis 250°C herstellbar. Eine zu niedrige Entwässerungstemperatur hat den Nachteil, einer unvollständigen bzw. zu geringen Pyrophosphatbildung. Eine zu hohe Entwässerungstemperatur hat den Nachteil, dass unerwünschte langkettige Magnesiumphosphate gebildet werden.

Das erfindungsgemäße Produkt kann mit Vorteil durch Entwässern im Drehrohr oder im Sprühturm hergestellt werden.

Bei der Herstellung im Drehrohr kann sowohl das Gleichstrom- als auch das Gegenstromverfahren angewendet werden. Man versprüht beim Gleichstromverfahren die Phosphatlösung durch eine in das Drehrohr reichende Flamme auf ein heißes Bett aus bereits entwässertem Produkt. Das Material wandert dann mit dem heißen Luftstrom zum Austragsende und wird dabei entwässert.

Bei der Herstellung im Sprühturm wird die Phosphatlösung über Mehrstoffdüsen in den Sprühturmkopf versprüht. Im Sprühturmkopf wird durch Brenner eine Flammenzone erzeugt. Die eingesprühte Phosphatlösung bewegt sich im Gleichstrom mit den Brennergasen nach unten und wird dabei entwässert.

In einer weiteren Ausführungsform der Erfindung besitzt das erfindungsgemäße Produkt einen Neutralisationswert (NW) von 30 bis 100, vorzugsweise von 50 bis 90, besonders bevorzugt von 60 bis 80. Den Neutralisationswert des Produktes in diesem Bereich zu halten, hat den Vorteil, dass man im Verhältnis zum Kohlendioxidträger geringe Einsatzmengen benötigt.

In einer weiteren Ausführungsform der Erfindung besitzt das erfindungsgemäße Produkt eine Reaktionsgeschwindigkeit (ROR, Rate of Reaction) von 5 bis 60, vorzugsweise von 7 bis 35, besonders bevorzugt von 10 bis 25. Die ROR des Produktes in diesem Bereich zu halten, hat den Vorteil eines geringen Vortriebs (Kohlendioxidverlust) und dadurch einer guten Lockerung des Gebäcks. Eine zu niedrige ROR hat den Nachteil, dass eine zu späte Kohlendioxidentwicklung im Ofen einsetzt und dadurch das Gebäck nicht ausreichend gelockert wird. Eine zu hohe ROR hat den Nachteil einer zu schnellen Vorreaktion und eines geringen Backvolumens.

In einer weiteren Ausführungsform der Erfindung besitzt das erfindungsgemäße Produkt eine Korngröße kleiner 500 μm, vorzugsweise kleiner 300 μm, besonders bevorzugt kleiner 200 μm.

Die Korngröße des Produktes wird im Siebverfahren bestimmt. Sie im vorgenannten Bereich zu halten, hat den Vorteil, dass das Produkt beim Mischen gleichmäßig verteilt wird und gleichzeitig noch gut handhabbar ist. Eine zu niedrige Korngröße hat den Nachteil, dass das Produkt sehr stark staubt und leicht verklumpt. Außerdem sind sehr kleine Korngrößen aufwendig und damit teuer in der Herstellung. Eine zu hohe Korngröße hat den Nachteil, dass das Produkt eine schlechtere Löslichkeit hat und sich nicht vollständig während des Backprozesses umsetzen kann.

Die vorliegende Erfindung umfasst weiterhin ein Triebsystem für die Herstellung von Backwaren mit einem Kohlendioxidträger und einem Triebsäuresystem, wobei das Triebsäuresystem das zuvor beschriebene erfindungsgemäße Produkt enthält.

In einer weiteren Ausführungsform der Erfindung enthält die Triebsäure wenigstens eine weitere von saurem Magnesiumpyrophosphat oder dem erfindungsgemäßen Produkt verschiedene Triebsäure. Diese wenigstens eine weitere Triebsäure umfasst mit Vorteil saures Natriumpyrophosphat (SAPP), saures Natriumaluminiumphosphat (SALP), Natriumaluminiumsulfat (SAS) , Monocalciumphosphat-Monohydrat (MCPM), Monocalciumphosphat wasserfrei (AMCP), Dicalciumphosphat-Dihydrat (DCPD), saures Calciumpyrophosphat (CAPP), Zitronensäure, Weinsäure, Weinstein (Kaliumhydrogentartrat), Glucono-delta-Lacton, Natriumhydrogencitrat, Fumarsäure oder Gemische oder Kombinationen der vorgenannten.

Besonders bevorzugt enthält das erfindungsgemäße Triebsystem als Kohlendioxidträger Natriumhydrogencarbonat, welches mit dem Triebsäuresystem unter Freisetzung von Kohlendioxid reagiert. Andere Kohlendioxidträger, wie sie auf dem Gebiet bekannt sind, können jedoch ebenfalls eingesetzt werden.

Die Erfindung umfasst weiterhin die Verwendung des zuvor beschriebenen erfindungsgemäßen Produktes als Triebsäuresystem bei der Herstellung von Backwaren.

Die Herstellung des Produktes, welches saures Magnesiumpyrophosphat (Magnesiumdihydrogendiphosphat) und wenigstens Magnesiumorthophsphat enthält, erfolgt durch Entwässern einer wässrigen Lösung oder Suspension einer Magnesiumphosphatverbindung, die ein Molverhältnis von Mg:P von 0,4 - 0,6 : 1 aufweist, wobei das Entwässern bis zu einem Glühverlust von 7,5 bis 13,5 % durchgeführt wird.

Die Verwendung von einem Produkt, welches in erfindungsgemäßer Art saures Magnesiumpyrophosphat in Kombination mit weiteren Magnesiumphosphatverbindungen enthält, als Triebsäure für die Herstellung von Backwaren ist den Erfindern bisher nicht bekannt gewesen. Es war daher überraschend, dass mit einem solchen Triebsäuresystem gute Backergebnisse erzielt und die Nachteile des Standes der Technik überwunden werden konnten.

Das in dem erfindungsgemäßen Triebsystem als Triebsäure enthaltene Produkt lässt sich neben der erfindungsgemäßen Verwendung als Triebsäure für die Herstellung von Backwaren zum Beispiel auch zum Schäumen von Kunststoffen und Farben einsetzen.

Die Erfindung wird durch die folgenden Beispiele weiter erläutert, ohne darauf beschränkt zu sein.

**Beispiel 1: Triebsäureherstellung**

Für die Herstellung von erfindungsgemäßem Produkt, welches saures Magnesiumpyrophosphat enthält, kann eine Magnesiumphosphatlösung erzeugt werden, indem man z.B. handelsübliche Magnesiumquellen, wie $Mg(OH)_2$, MgO oder $MgCO_3$, in Phosphorsäure einrührt. Die Magnesiumphosphatlösung wird dann mit einem Trocknungsaggregat bei einer Temperatur von 140°C bis 300°C in ein saures Magnesiumpyrophosphat überführt. Als geeignetes Trocknungsaggregat kommt jedes Aggregat in Frage, das die erforderlichen Temperaturen erzielen kann. Als besonders geeignet haben sich Knet-, Misch- und Drehrohrtrockner erwiesen. Die Trocknung und Kondensation der Magnesiumphosphatlösung zum sauren Magnesiumpyrophosphat kann kontinuierlich und diskontinuierlich durchgeführt werden.

Ansatz (a)

In 742 g entsalztem Wasser werden 600 g Phosphorsäure (85%) gelöst, dazu werden 209 g Magnesiumoxid zugefügt. Das Gemisch wird 18h im Vakuum bei 145°C getrocknet, bis ein Glühverlust des Endprodukts von 13,2 % erreicht ist.

Ansatz (b)

58,3 g Magnesiumhydroxid, die in 80 ml entsalztem Wasser angemischt sind, werden zu 267 g Phosphorsäure (75%) hinzugefügt. Das Gemisch wird in einer Porzellanschale bei 250°C getrocknet, bis ein Glühverlust des Endprodukts von 9,0 % erreicht ist.

Ansatz (c)

116,6 g Magnesiumhydroxid, die in 160 ml entsalztem Wasser angemischt sind, werden zu 533,6 g Phosphorsäure (75%) hinzugefügt. Das Gemisch wird in einem ölbeheizten Knetaggregat bei einer Temperatur von 280 °C getrocknet, bis ein Glühverlust des Endprodukts von 11,5 % erreicht ist.

Ansatz (d)

167,6 g Magnesiumcarbonat, die in 160 ml entsalztem Wasser angemischt sind, werden zu 533,6 g Phosphorsäure (75%) hinzugefügt. Das Gemisch wird in einem ölbeheizten Knetaggregat bei einer Temperatur von 280 °C getrocknet, bis ein Glühverlust des Endprodukts von 9,2 % erreicht ist.

Ansatz (e)

Zu 1216 kg Phosphorsäure (75%) werden 270 kg angemaischtes Magnesiumhydroxid gegeben. Die entstehende Magnesiumphosphatlösung wird in einem offenen Drehrohr auf ein Rückgutbett aufgesprüht und bei einer Produkttemperatur von 180 - 250 °C in ein Magnesiumpyrophosphat enthaltendes Produkt überführt, bis ein Glühverlust von 9,0 - 11,5 % erreicht ist.

Analysenergebnisse für die Ansätze (a) bis (e) sind in der nachfolgenden Tabelle 1 wiedergegeben.

Tabelle 1 - Analysenergebnisse für die Ansätze (a) bis (e)

| Ansatz | Gesamt- $P_2O_5$ | MgO | GV (800°C) | Pyro-$P_2O_5$ / Ortho-$P_2O_5$ | NW | ROR |
|--------|--------|-----|------------|------------------------------|-----|-----|
|        | [%]    | [%] | [%]        | [%/%]                        |     | [% $CO_2$] |
| (a)    | 68,2   | 19,1| 13,2       | 93 / 7                       | 75  | 22  |
| (b)    | 71,4   | 19,6| 9,0        | 96 / 4                       | 65  | 19  |
| (c)    | 69,5   | 19,1| 11,5       | 95 / 5                       | 67  | 14  |
| (d)    | 70,6   | 19,8| 9,2        | 96 / 4                       | 68  | 17  |
| (e)    | 69,6   | 19,4| 11,0       | 95 / 5                       | 70  | 12  |

Pyro-$P_2O_5$ (Pyrophosphat-$P_2O_5$) Ortho-$P_2O_5$ (Orthophosphat-$P_2O_5$) sind relative Gewichtsprozentangaben, die sich auf den Gesamt-$P_2O_5$-Gehalt im Produkt beziehen.

**Beispiel2: Massenherstellung**

Für die Durchführung vergleichender Versuche gemäß den nachfolgenden Beispielen wurden die Massen nach der folgenden Rezeptur hergestellt.

Tabelle 2 - Teigrezeptur

| Bestandteile | [g] |
|--------------|-----|
| Zucker, fein | 270 |
| Weizenmehl Typ 550 | 200 |
| Vollei | 150 |
| Backmargarine | 120 |
| Weizenstärke | 100 |
| Wasser | 100 |
| Aufschlagemulgator | 15 |
| $NaHCO_3$ | 2,5 |
| NaCl | 2 |
| Triebsäure bzw. Triebsäurekombination | (*) |

(*) Die Triebsäure bzw. Triebsäurekombination wurde, wenn nichts anderes angegeben ist, in einer Menge eingesetzt, die gemäß ihrem Neutralisationswert (theoretisch) zu einer vollständigen Neutralisation des eingesetzten Kohlendioxidträgers Natriumhydrogencarbonat führt.

Für reine Triebsäuren gilt:

$$\text{Gramm Säureträger} \quad = \quad \frac{\text{Gramm Kohlendioxidträger} \times 100}{\text{NW}}$$

Für Triebsäurekombinationen gilt:

$$\text{Gramm Säureträger gesamt} \;=\; \frac{\text{Gramm Kohlendioxidträger x 100}}{\%1 \times NW1 + \%2 \times NW2 + \%3 \times NW3 \ldots}$$

%1, %2, %3 ... = Gewichtsprozent Säureträger 1, 2, 3... in der Triebsäurekombination
NW1, NW2, NW3 ... = Neutralisationswert Säureträger 1, 2, 3... in der Triebsäurekombination

Massenherstellung im All-In-Verfahren

Das eingesetzte Vollei wurde vor der Verwendung im Ultra-Turrax (Janke & Kunkel) homogenisiert und ebenso wie das Wasser auf Raumtemperatur gebracht. Die trockenen Zutaten wurden zusammen in eine Schüssel eingewogen und mit einem Schneebesen gut verrührt. Die Margarine wurde separat eingewogen, den vermischten Trockenzutaten zugegeben und mit einem Flachrührer grob zerkleinert. Anschließend wurden die Zutaten in die Rührschüssel einer Rührmaschine (Hobart) überführt und zunächst auf niedrigster Stufe 1 gerührt. Nach 15 Sekunden wurden das abgewogene homogenisierte Vollei und die abgemessene Menge Wasser hinzugefügt. Nach weiteren 20 Sekunden wurde auf der nächst höheren Stufe 2 für eine Minute und danach auf der nächst höheren Stufe 3 für weitere 3 Minuten gerührt. Anschließend wurde die Rührmaschine abgeschaltet.

Von der Masse wurden Portionen von jeweils 400g in Formen eingewogen und für 45 Minuten im Ofen bei 200°C Unterhitze und 220°C Oberhitze gebacken. Die Backergebnisse sind in der nachfolgenden Tabelle 3 wiedergegeben.

Tabelle 3 - Backergebnisse

| Triebssystem | | NW | ROR [% CO$_2$] | spezifisches Gebäck-volumen [ml/g] | pH-Wert-Verlauf nach 5 min / 40 min / im fertigen Gebäck | Geschmack / Kaueigenschaften |
|---|---|---|---|---|---|---|
| 3,8 g | Produkt (b) | 65 | 19 | 2,62 | 7,8 / 7,6 / 7,5 | gebäcktypisch |
| 2,5 g | NaHCO3 | | | | | |
| 3,7 g | Produkt (d) | 68 | 17 | 2,60 | 7,8 / 7,8 / 7,4 | gebäcktypisch |
| 2,5 g | NaHCO3 | | | | | |
| 3,6 g | Produkt (e) | 70 | 12 | 2,64 | 7,8 / 7,7 / 7,3 | gebäcktypisch |
| 2,5 g | NaHCO3 | | | | | |
| 3,5 g | SAPP | 73 | 26 | 2,51 | 7,5 / 7,4 / 7,5 | leichter Fremdgeschmack / gebäcktypisch |
| 2,5 g | NaHCO3 | | | | | |
| 3,2 g | MCPM | 80 | 60 | 2,24 | 6,9 / 6,9 / 7,3 | gebäcktypisch / sehr klebrig |
| 2,5 g | NaHCO3 | | | | | |
| 7,6 g | DCPD | 33 | 11 | 2,49 | 8,0 / 8,0 / 7,6 | gebäcktypisch |
| 2,5 g | NaHCO3 | | | | | |
| 4,8 g | CAPP | 52 | 22 | 2,55 | 7,5 / 7,4 / 7,3 | gebäcktypisch |
| 2,5 g | NaHCO3 | | | | | |

Die Backergebnisse zeigen die Vorteile der eingesetzten erfindungsgemäßen Produkte gegenüber Vergleichsbeispielen. Die als Triebsäuren eingesetzten erfindungsgemäßen Produkte lieferten alle höhere Gebäckvolumen, die mit einer verbesserten Lockerung der Gebäckkrume einhergingen. Ein Fremdgeschmack wurde nicht festgestellt.

Die Verwendung von SAPP lieferte ein geringeres spezifisches Gebäckvolumen und es wurde ein leichter Fremdgeschmack festgestellt. Die Verwendung von MCPM im Triebsystem lieferte ein sehr geringes spezifisches Gebäckvolumen und stark klebrige Kaueigenschaften. DCPD im Triebsystem führte ebenfalls zu einem relativ geringen spezifischen Gebäckvolumen und erforderte aufgrund des niedrigen NW die Zugabe einer großen Menge dieser Triebsäure. Mit CAPP als Triebsäure wurden keine Vorteile gegenüber erfindungsgemäßen Triebsystemen erreicht.

**Patentansprüche**

1. Triebsystem für die Herstellung von Backwaren mit einem Kohlendioxidträger und einem Triebsäuresystem, **dadurch gekennzeichnet, dass** das Triebsäuresystem ein Produkt enthält, welches saures Magnesiumpyrophosphat und wenigstens Magnesiumorthophosphat enthält, herstellbar durch Entwässern einer wässrigen Lösung oder Suspension einer Magnesiumphosphatverbindung, die ein Molverhältnis von Mg:P von 0,4 - 0,6 : 1 aufweist, wobei das Produkt einen Glühverlust von 7,5 bis 13,5 % aufweist, der bestimmt wird, indem man 2 g Probe bei 800°C für 30 min glüht und den Massenverlust beim Glühen bestimmt, und wobei das Produkt 30 bis 99 Gew.-% Pyrophosphat-$P_2O_5$ und 1 bis 70 Gew.-% Orthophosphat-$P_2O_5$ enthält, wobei sich die Gewichtsprozentangaben auf den Gesamt-$P_2O_5$-Gehalt im Produkt beziehen.

2. Triebsystem nach Anspruch 1, **dadurch gekennzeichnet, dass** das Produkt, welches saures Magnesiumpyrophosphat und wenigstens Magnesiumorthophosphat enthält, einen Glühverlust von 9 bis 11,5 % aufweist.

3. Triebsystem nach einem der vorangegangenen Ansprüche, **dadurch gekennzeichnet, dass** das Produkt, welches saures Magnesiumpyrophosphat und wenigstens Magnesiumorthophosphat enthält, durch Entwässern bei 140 bis 300 °C, vorzugsweise 180 bis 250 °C herstellbar ist.

4. Triebsystem nach einem der vorangegangenen Ansprüche, **dadurch gekennzeichnet, dass** das Produkt, welches saures Magnesiumpyrophosphat und wenigstens Magnesiumorthophosphat enthält, durch Entwässern im Drehrohr oder im Sprühturm herstellbar ist.

5. Triebsystem nach einem der vorangegangenen Ansprüche, **dadurch gekennzeichnet, dass** das Produkt, welches saures Magnesiumpyrophosphat und wenigstens Magnesiumorthophosphat enthält, einen Neutralisationswert (NW) von 30 bis 100, vorzugsweise von 50 bis 90, besonders bevorzugt von 60 bis 80 besitzt.

6. Triebsystem nach einem der vorangegangenen Ansprüche, **dadurch gekennzeichnet, dass** das Produkt, welches saures Magnesiumpyrophosphat und wenigstens Magnesiumorthophosphat enthält, eine Reaktionsgeschwindigkeit (ROR, Rate of Reaction) von 5 bis 60, vorzugsweise von 7 bis 35, besonders bevorzugt von 10 bis 25 besitzt.

7. Triebsystem nach einem der vorangegangenen Ansprüche, **dadurch gekennzeichnet, dass** das Produkt, welches saures Magnesiumpyrophosphat und wenigstens Magnesiumorthophosphat enthält, eine Korngröße kleiner 500 $\mu$m, vorzugsweise kleiner 300 $\mu$m, besonders bevorzugt kleiner 200 $\mu$m besitzt.

8. Triebsystem nach einem der vorangegangenen Ansprüche, **dadurch gekennzeichnet, dass** das Triebsäuresystem wenigstens eine weitere von dem Produkt, welches saures Magnesiumpyrophosphat und wenigstens Magnesiumorthophosphat enthält, verschiedene Triebsäure enthält.

9. Triebsystem nach Anspruch 8, **dadurch gekennzeichnet, dass** die wenigstens eine weitere Triebsäure saures Natriumpyrophosphat (SAPP), saures Natriumaluminiumphosphat (SALP), Natriumaluminiumsulfat (SAS), Monocalciumphosphat-Monohydrat (MCPM), Monocalciumphosphat wasserfrei (AMCP), Dicalciumphosphat-Dihydrat (DCPD), saures Calciumpyrophosphat (CAPP), Zitronensäure, Weinsäure, Weinstein (Kaliumhydrogentartrat), Glucono-delta-Lacton, Natriumhydrogencitrat, Fumarsäure oder Gemische oder Kombinationen der vorgenannten umfasst.

10. Triebsystem nach einem der vorangegangenen Ansprüche, **dadurch gekennzeichnet, dass** es als Kohlendioxidträger Natriumhydrogencarbonat oder Kaliumhydrogencarbonat enthält, welches mit dem Triebsäuresystem unter Freisetzung von Kohlendioxid reagiert.

11. Verwendung des Produkts, welches saures Magnesiumpyrophosphat und wenigstens Magnesiumorthophosphat enthält, wie es in einem der vorangegangenen Ansprüche definiert ist, als Triebsäuresystem bei der Herstellung von Backwaren.

**Claims**

1. A raising system for the production of bakery products with a carbon dioxide carrier and a raising acid system **characterised in that** the raising system contains a product which contains acid magnesium pyrophosphate and at least magnesium orthophosphate, producible by removal of water from an aqueous solution or suspension of a magnesium phosphate compound which has a molar ratio of Mg:P of 0.4 - 0.6:1, wherein the product has a loss on ignition of 7.5 to 13.5 %, which is determined by strongly heating of a 2 g sample for 30 min at 800° C and by determining the loss of mass in the heating operation and wherein the product contains 30 to 99 % by weight of pyrophosphate $P_2O_5$ and 1 to 70 % by weight of orthophosphate $P_2O_5$, wherein the weight percent specifications relate to the total amount of $P_2O_5$ in the product.

2. A raising system according to claim 1 **characterised in that** the product, which contains acid magnesium pyrophosphate and at least magnesium orthophosphate, has a loss on ignition of 9 to 11.5 %.

3. A raising system according to one of the preceding claims **characterised in that** the product, which contains acid magnesium pyrophosphate and at least magnesium orthophosphate, is producible by the removal of water at 140 to 300° C, preferably 180 to 250° C.

4. A raising system according to one of the preceding claims **characterised in that** the product, which contains acid magnesium pyrophosphate and at least magnesium orthophosphate, is producible by the removal of water in a rotary tube or a spray tower.

5. A raising system according to one of the preceding claims **characterised in that** the product, which contains acid magnesium pyrophosphate and at least magnesium orthophosphate, has a neutralisation value (NV) of 30 to 100, preferably 50 to 90, particularly preferably 60 to 80.

6. A raising system according to one of the preceding claims **characterised in that** the product, which contains acid magnesium pyrophosphate and at least magnesium orthophosphate, has a rate of reaction (ROR) of 5 to 60, preferably 7 to 35, particularly preferably 10 to 25.

7. A raising system according to one of the preceding claims **characterised in that** the product, which contains acid magnesium pyrophosphate and at least magnesium orthophosphate, has a grain size of less than 500 μm, preferably less than 300 μm, particularly preferably less than 200 μm.

8. A raising system according to one of the preceding claims **characterised in that** the raising acid systems contains at least one further raising acid different from the product, which contains acid magnesium pyrophosphate and at least magnesium orthophosphate.

9. A raising system according to claim 8 **characterised in that** the at least one further raising acid includes acid sodium pyrophosphate (SAPP), acid sodium aluminium phosphate (SALP), sodium aluminium sulphate (SAS), monocalcium phosphate monohydrate (MCPM), anhydrous monocalcium phosphate (AMCP), dicalcium phosphate dihydrate (DCPD), acid calcium pyrophosphate (CAPP), citric acid, tartaric acid, tartar (potassium hydrogen tartrate), glucono-delta lactone, sodium hydrogen citrate, fumaric acid or mixtures or combinations of the aforementioned substances.

10. A raising system according to one of the preceding claims **characterised in that** as the carbon dioxide carrier it contains sodium hydrogen carbonate or potassium hydrogen carbonate which reacts with the raising acid system with the liberation of carbon dioxide.

11. Use of the product, which contains acid magnesium pyrophosphate and at least magnesium orthophosphate, as it is defined in one of the preceding claims, as a raising acid system in the production of bakery products.

**Revendications**

1. Système de levée de pâte pour la fabrication de produits de boulangerie avec un support de dioxyde de carbone et un système de levain acide **caractérisé en ce que** le système de levée de pâte compose un produit contenant du pyrophosphate de magnésium acide et au moins de l'orthophosphate de magnésium, pouvant être fabriqué par déshydratation d'une solution aqueuse ou par suspension d'un composé de phosphate de magnésium présentant un ratio molaire Mg:P de 0,4 à 0,6 : 1, le produit présentant une perte au feu de 7,5 à 13,5 % déterminée par recuit d'un échantillon de 2 g à 800 °C pendant 30 min. et calcul de la perte massique après recuit, et le produit contenant 30 à 99 % en poids de $P_2O_5$ de pyrophosphate et de 1 à 70 % en poids de $P_2O_5$ d'orthophosphate, les indications de pourcentage en poids se rapportant à la teneur totale en $P_2O_5$ dans le produit.

**2.** Système de levée de pâte selon la revendication 1, **caractérisé en ce que** le produit contenant du pyrophosphate de magnésium acide et au moins de l'orthophosphate de magnésium présente une perte au feu de 9 à 11,5 %.

**3.** Système de levée de pâte selon l'une des revendications précédentes, **caractérisé en ce que** le produit contenant du pyrophosphate de magnésium acide et au moins de l'orthophosphate de magnésium peut être fabriqué par déshydratation entre 140 et 300 °C, de préférence entre 180 et 250 °C.

**4.** Système de levée de pâte selon l'une des revendications précédentes, **caractérisé en ce que** le produit contenant du pyrophosphate de magnésium acide et au moins de l'orthophosphate de magnésium peut être fabriqué par déshydratation dans le four rotatif ou la tour de pulvérisation.

**5.** Système de levée de pâte selon l'une des revendications précédentes, **caractérisé en ce que** le produit contenant du pyrophosphate de magnésium acide et au moins de l'orthophosphate de magnésium possède une valeur de neutralisation (NW) de 30 à 100, de préférence de 50 à 90, en particulier de préférence de 60 à 80.

**6.** Système de levée de pâte selon l'une des revendications précédentes, **caractérisé en ce que** le produit contenant du pyrophosphate de magnésium acide et au moins de l'orthophosphate de magnésium possède une vitesse de réaction (ROR, Rate of Reaction) de 5 à 60, de préférence de 7 à 35, en particulier de préférence de 10 à 25.

**7.** Système de levée de pâte selon l'une des revendications précédentes, **caractérisé en ce que** le produit contenant du pyrophosphate de magnésium acide et au moins de l'orthophosphate de magnésium possède une grosseur de grain inférieure à 500 $\mu$m, de préférence inférieure à 300 $\mu$m, en particulier de préférence inférieure à 200 $\mu$m.

**8.** Système de levée de pâte selon l'une des revendications précédentes, **caractérisé en ce que** le système de levain acide contient au moins un autre levain acide différent du produit contenant du pyrophosphate de magnésium acide et au moins de l'orthophosphate de magnésium.

**9.** Système de levée de pâte selon la revendication 8, **caractérisé en ce que** l'au moins un autre levain acide comprend du pyrophosphate de sodium (SAPP), du phosphate de sodium-aluminium (SALP), du sulfate de sodium-aluminium (SAS), du phosphate de mono-calcium hydraté (MCPM), du phosphate de mono- calcium anhydre (AMCP), du phosphate de dicalcium dihydraté (DCPD), du pyrophosphate de calcium acide (CAPP), de l'acide citrique, de l'acide tartrique, du tartre (tartrate d'hydrogène de potassium), du glucono-delta-lactone, du citrate d'hydrogène de sodium, de l'acide fumarique ou des mélanges ou combinaisons de ceux-ci.

**10.** Système de levée de pâte selon l'une des revendications précédentes, **caractérisé en ce qu'**il contient, en tant que support de dioxyde de carbone, du carbonate d'hydrogène de sodium qui réagit au système de levain acide sous libération de dioxyde de carbone.

**11.** Utilisation du produit contenant du pyrophosphate de magnésium acide et au moins de l'orthophosphate de magnésium selon l'une des revendications précédents comme système de levain acide pour la fabrication de produits de boulangerie.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0648421 A
- US 5405636 A
- US 3852497 A
- US 5409724 A

**In der Beschreibung aufgeführte Nicht-Patentliteratur**

- **BROSE et al.** Chemische Backtriebmittel. 2007, vol. 2